# EUROPÄISCHE PATENTSCHRIFT

(11) **EP 3 333 823 B1**
(45) Veröffentlichungstag und Bekanntmachung des Hinweises auf die Patenterteilung: **10.01.2024**
(21) Anmeldenummer: 17202514.0
(22) Anmeldetag: 20.11.2017
(51) Int. Cl.: G08G 1/01, G08G 1/096

(54) **PROGNOSE EINER SIGNALISIERUNG EINER LICHTSIGNALANLAGE MITTELS KÜNSTLICHER INTELLIGENZ**
PROGNOSIS OF SIGNALLING A TRAFFIC LIGHT SYSTEM USING ARTIFICIAL INTELLIGENCE
PRONOSTIC D'UNE SIGNALISATION D'UNE INSTALLATION DE SIGNAUX LUMINEUX AU MOYEN DE L'INTELLIGENCE ARTIFICIELLE

(30) Priorität: 07.12.2016 DE 102016224359
(43) Veröffentlichungstag der Anmeldung: 13.06.2018
(73) Patentinhaber: Yunex GmbH, 81739 München (DE)
(72) Erfinder: Hahn, Denis Philipp, 80469 München (DE); Hobohm, Daniel, 83607 Holzkirchen (DE)
(74) Vertreter: Patentanwaltskanzlei WILHELM & BECK

(56) Entgegenhaltungen:
- DE-A1-102015 207 807
- US-A1- 2014 277 986
- Hoyer Robert: "Schaltzeitprognose von verkehrsabhängigen Lichtsignalanlagen unter Berücksichtigung verschiedener Steuerungsverfahren.", Researchgate, 1 June 2015 (2015-06-01), pages 1-25, XP055855940, Retrieved from the Internet: URL:https://www.researchgate.net/publicati on/305342552_Schaltzeitprognose_von_verkeh rsabhangigen_Lichtsignalanlagen_unter_Beru cksichtigung_verschiedener_Steuerungsverfa hren [retrieved on 2021-10-28]

## Beschreibung

Die Erfindung betrifft ein System zum Prognostizieren eines zukünftigen Signalbilds einer Lichtsignalanlage.

Die Erfindung betrifft ferner ein Verfahren zum Prognostizieren eines zukünftigen Signalbilds einer Lichtsignalanlage.

Die Erfindung betrifft des Weiteren ein Computerprogramm.

Das Prognostizieren von Signalbildern von Lichtsignalanlagen ist in der Literatur unter der Formulierung "Signal Phase and Timing" bekannt, wobei "Signal Phase and Timing" auch mit "SPAT" abgekürzt werden kann.

In der Regel liegt jeder Lichtsignalanlage eine individuelle Planung und Programmierung sowie Versorgung zugrunde, die in komplexen "Wenn-Dann"-Beziehungen aus vorliegenden Informationen, die beispielsweise von Detektoren, die an einer Straße angeordnet sind, bereitgestellt werden können, mittels einer Programmierung eine Ausgabe (Signalbild) je Fahrbahn ermitteln. Die hierfür genutzten Programmiersprachen können sich je nach Lichtsignalanlage ändern. Zudem ist üblicherweise jeder Verkehrsknoten individuell geplant und meist in der Regel nicht mit anderen Verkehrsknoten zu vergleichen.

Bisher musste also unter anderem ein volles Wissen über die Programmierung der Lichtsignalanlage vorliegen, damit eine sinnvolle Prognose über die nächsten Schritte der Lichtsignalanlage getroffen werden kann.

Die Offenlegungsschrift US 2014/0277986 A1 beschreibt ein Verfahren zum Prognostizieren eines zukünftigen Signalbilds einer Lichtsignalanlage.

Die Offenlegungsschrift DE 10 2015 207 807 A1 offenbart eine Vorrichtung für ein Fahrzeug zum Ermitteln einer Wahrscheinlichkeit eines Zustandes einer Signalanzeige.

Die Druckschrift "Hoyer Robert: "Schaltzeitprognose von verkehrsabhängigen Lichtsignalanlagen unter Berücksichtigung verschiedener Steuerungsverfahren.", Researchgate, 1. Juni 2015 (2015-06-01), Seiten 1-25, XP055855940, Gefunden im Internet: URL:https://www.researchgate.net/publication/305342552_Schalt zeitprognose_von_verkehrsabhangigen_Lichtsignalanlagen_unter_Berucksich tigung_verschiedener_Steuerungsverfahren [gefunden am 2021-10-28]" offenbart ein Verfahren zur Prognose von Schaltzeiten an verkehrsabhängig gesteuerten Lichtsignalanlagen.

Die der Erfindung zugrundeliegende Aufgabe ist darin zu sehen, ein effizientes Konzept zum effizienten Prognostizieren eines zukünftigen Signalbilds einer Lichtsignalanlage bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Die Erfindung basiert auf der Erkenntnis, dass die obige Aufgabe dadurch gelöst werden kann, dass eine künstliche Intelligenz verwendet wird, um basierend auf den Verkehrsdaten ein zukünftiges Signalbild einer Lichtsignalanlage zu prognostizieren. Die künstliche Intelligenz wird hierbei unter Verwendung der Verkehrsdaten sowie von Signalbilddaten trainiert, wobei diese Signalbilddaten einem mittels der Lichtsignalanlage basierend auf den gleichen Verkehrsdaten ermittelten Signalbild entsprechen.

Das heißt also insbesondere, dass die künstliche Intelligenz dadurch trainiert wird, dass als Eingangsgrößen zum einen die Verkehrsdaten und zum anderen die Signalbilddaten der Lichtsignalanlage verwendet werden.

Die künstliche Intelligenz erhält also die gleichen Verkehrsdaten wie die Lichtsignalanlage. Im Rahmen des Trainings wird dann erfindungsgemäß das prognostizierte zukünftige Signalbild mit dem Signalbild verglichen, welches mittels der Lichtsignalanlage unter Verwendung der Verkehrsdaten ermittelt wurde. So kann die künstliche Intelligenz in vorteilhafter Weise über die Zeit lernen, wie die Lichtsignalanlage basierend auf den Verkehrsdaten das zukünftige Signalbild ermittelt.

Somit ist also eine Prognostizierung des zukünftigen Signalbilds der Lichtsignalanlage in vorteilhafter Weise ermöglicht, ohne dass hierfür eine genaue Kenntnis der Programmierung und Planung der Lichtsignalanlage erforderlich ist.

Das erfindungsgemäße Konzept benötigt also kein Wissen über die genaue Funktionsweise der Lichtsignalanlage. Das Konzept sieht lediglich vor, dass der künstlichen Intelligenz die gleichen Verkehrsdaten zur Verfügung gestellt werden wie der Lichtsignalanlage. Das Konzept sieht weiter vor, dass eine Ausgabe der Lichtsignalanlage, also das ermittelte Signalbild ebenfalls der künstlichen Intelligenz zur Verfügung gestellt wird, um diese zu trainieren, so dass sie das Verhalten der Lichtsignalanlage lernen kann, um hierüber eine Prognose des zukünftigen Signalbilds durchführen zu können.

Somit wird also insbesondere der technische Vorteil bewirkt, dass ein effizientes Konzept zum effizienten Prognostizieren eines zukünftigen Signalbilds einer Lichtsignalanlage bereitgestellt ist.

Das Konzept ermöglicht also in vorteilhafter Weise eine Prognose einer Signalisierung einer Lichtsignalanlage im Straßenverkehr mittels einer künstlichen Intelligenz.

Verkehrsdaten im Sinne der Beschreibung beschreiben beispielsweise einen Verkehrszustand. Verkehrsdaten im Sinne der Beschreibung umfassen beispielsweise Detektordaten eines oder mehrerer Detektoren zur Erfassung eines Verkehrs. Solche Detektoren sind beispielsweise an, über oder in einer Fahrbahn angeordnet und zählen beispielsweise Kraftfahrzeuge.

Verkehrsdaten im Sinne der Beschreibung umfassen also insbesondere sämtliche Daten, die die Lichtsignalanlage erhält, um basierend auf diesen Daten ein zukünftiges Signalbild zu ermitteln, welches dann auch mittels der Lichtsignalanlage tatsächlich angezeigt wird.

Eine künstliche Intelligenz im Sinne der Beschreibung umfasst beispielsweise Methoden respektive Verfahren aus der Informatik, welche beispielsweise die Automatisierung von intelligentem Verhalten ermöglichen. Die Methoden der künstlichen Intelligenz zeichnen sich unter anderem beispielsweise dadurch aus, dass mit den Mitteln der Mathematik die Fähigkeit zu lernen sowie die Fähigkeit mit Unsicherheit und probabilistischen Informationen umzugehen ermöglicht werden. Unter anderem werden beispielsweise folgende Methoden der künstlichen Intelligenz zugeschrieben: Maschinelles Lernen, Deep Learning, Neuronale Netzwerke, Wissenserwerb, Wissensrepräsentation, Kognitionsmodelle, Heuristische Suche, Sprachverarbeitung. Für die verschiedenen Methoden der künstlichen Intelligenz stehen auch eine Vielzahl an KI (Künstliche Intelligenz)-Programmiersprachen und sogenannter Frameworks zur Verfügung, welche dem Anwender die Nutzung von sogenannten Software-Libraries (Software-Bibliotheken) ermöglichen und diese beispielsweise auch auf cloudbasierten Rechenzentren zur Ausführung bringen. Unter anderem sind diese beispielsweise IBM-Watson, Google-TensorFlow und Microsoft Azure.

Erfindungsgemäß ist beim System vorgesehen, dass die künstliche Intelligenz ein Signalbildprognosemodell aufweist, wobei die künstliche Intelligenz ausgebildet ist, basierend auf dem Signalbildprognosemodell das zukünftige Signalbild unter Verwendung der Verkehrsdaten zu prognostizieren.

In einer Ausführungsform des Systems ist vorgesehen, dass die Recheneinheit respektive die künstliche Intelligenz ausgebildet ist, das Signalbildprognosemodell basierend auf den Verkehrsdaten und den Signalbilddaten der Lichtsignalanlage zu trainieren.

Gemäß einer Ausführungsform des Systems ist vorgesehen, dass die künstliche Intelligenz ein neuronales Netzwerk umfasst.

Dadurch wird zum Beispiel der technische Vorteil bewirkt, dass das zukünftige Signalbild effizient prognostiziert werden kann.

Gemäß einer Ausführungsform des Systems ist vorgesehen, dass ein Maschinenlern-Algorithmus in der künstlichen Intelligenz implementiert ist.

Dadurch wird zum Beispiel der technische Vorteil bewirkt, dass das zukünftige Signalbild effizient prognostiziert werden kann. Ebenso wird beispielsweise der technische Vorteil erwirkt, dass das System auf eine Vielzahl von Steuergeräten von Lichtsignalanlagen angewandt werden kann, da es keine herstellerspezifischen und/oder verfahrensspezifischen Daten benötigt. Darüber hinaus wird beispielsweise der Vorteil bewirkt, dass sich das einmalig eingerichtete System kontinuierlich verbessert und neuen Situationen ohne korrigierenden Eingriff in einen Prognosealgorithmus anpassen kann.

Erfindungsgemäß ist beim System vorgesehen, dass die künstliche Intelligenz Teil einer Cloud-Infrastruktur ist.

Dadurch wird zum Beispiel der technische Vorteil bewirkt, dass die künstliche Intelligenz effizient trainiert werden kann. Insbesondere wird dadurch der technische Vorteil bewirkt, dass das zukünftige Signalbild effizient prognostiziert werden kann.

Beispielsweise stellen Firmen wie Google mit ihrem Framework "TensorFlow" oder Microsoft mit ihrem Framework "Azure ML" oder IBM mit ihrem Framework "Watson" künstliche Intelligenzen zur Verfügung, auf welchen beispielsweise unter Verwendung von neuronalen Netzwerken Modelle trainiert und angewendet werden können.

In einer Ausführungsform umfasst das System ferner eine dritte Kommunikationsschnittstelle zum Senden von dem prognostizierten Signalbild entsprechenden Signalbilddaten über ein Kommunikationsnetzwerk an eine Netzwerkadresse.

Dadurch wird zum Beispiel der technische Vorteil bewirkt, dass das prognostizierte Signalbild effizient über ein Kommunikationsnetzwerk zur Verfügung gestellt werden kann.

Die Netzwerkadresse ist beispielsweise eine Netzwerkadresse eines Servers.

Die Netzwerkadresse ist beispielsweise die Netzwerkadresse eines Endgeräts, beispielsweise eines mobilen Endgeräts. Das mobile Endgerät ist beispielsweise ein Mobiltelefon.

Beispielsweise ist das Endgerät von einem Kraftfahrzeug umfasst. Das heißt also beispielsweise, dass die dem prognostizierten Signalbild entsprechenden Signalbilddaten über ein Kommunikationsnetzwerk an ein Kraftfahrzeug gesendet werden.

Ein Kommunikationsnetzwerk im Sinne der Beschreibung umfasst beispielsweise ein drahtgebundenes und/oder ein drahtloses Kommunikationsnetzwerk.

In einer Ausführungsform des Verfahrens umfasst die künstliche Intelligenz ein neuronales Netzwerk.

In einer Ausführungsform des Verfahrens ist ein Maschinenlern-Algorithmus in der künstlichen Intelligenz implementiert.

Erfindungsgemäß ist beim Verfahren vorgesehen, dass die künstliche Intelligenz Teil einer Cloud-Infrastruktur ist.

In einer Ausführungsform umfasst das Verfahren ferner ein Senden von dem prognostizierten Signalbild entsprechende Signalbilddaten über ein Kommunikationsnetzwerk an eine Netzwerkadresse.

Erfindungsgemäß ist beim Verfahren vorgesehen, dass die künstliche Intelligenz ein Signalbildprognosemodell aufweist, basierend auf welchem das zukünftige Signalbild unter Verwendung der Verkehrsdaten prognostiziert wird.

Das Signalbildprognosemodell wird beim Verfahren erfindungsgemäß basierend auf den Verkehrsdaten und den Signalbilddaten der Lichtsignalanlage trainiert.

Nach einer Ausführungsform ist vorgesehen, dass das Verfahren zum Prognostizieren eines zukünftigen Signalbilds einer Lichtsignalanlage mittels des Systems zum Prognostizieren eines zukünftigen Signalbilds einer Lichtsignalanlage aus- oder durchgeführt wird.

Erfindungsgemäß ist das System zum Prognostizieren eines zukünftigen Signalbilds einer Lichtsignalanlage eingerichtet, das Verfahren zum Prognostizieren eines zukünftigen Signalbilds einer Lichtsignalanlage auszuführen.

Technische Funktionalitäten des Systems zum Prognostizieren eines zukünftigen Signalbilds einer Lichtsignalanlage ergeben sich unmittelbar analog aus entsprechenden technischen Funktionalitäten des Verfahrens zum Prognostizieren eines zukünftigen Signalbilds einer Lichtsignalanlage und umgekehrt.

Das heißt also insbesondere, dass sich Systemmerkmale unmittelbar aus entsprechenden Verfahrensmerkmalen und umgekehrt ergeben.

Ausführungen, die im Zusammenhang mit dem System gemacht sind, gelten analog für das Verfahren und umgekehrt.

Die Formulierung "respektive" umfasst insbesondere die Formulierung "und/oder".

In einer Ausführungsform ist die Lichtsignalanlage mit mehreren Detektoren logisch verbunden. In einer Ausführungsform ist vorgesehen, dass das System zum Prognostizieren eines zukünftigen Signalbilds einer Lichtsignalanlage mit den gleichen Detektoren wie die Lichtsignalanlage logisch verbunden ist.

Das Prognostizieren eines zukünftigen Signalbilds umfasst insbesondere das Prognostizieren eines Zeitpunkts eines Beginns einer Grünphase respektive eines Beginns einer Rotphase.

Das Prognostizieren eines zukünftigen Signalbilds umfasst insbesondere das Prognostizieren eines Zeitpunkts eines Endes einer Grünphase respektive eines Endes einer Rotphase.

Gemäß einer Ausführungsform sind mehrere neuronale Netzwerke vorgesehen. Ausführungen, die im Zusammenhang mit einem neuronalen Netzwerk gemacht sind, gelten analog für mehrere neuronale Netzwerke und umgekehrt. Das heißt insbesondere, dass, wenn "neuronales Netzwerk" im Singular steht, stets der Plural mitgelesen soll und umgekehrt.

Erfindungsgemäß ist vorgesehen, dass das Signalbildprognosemodell in einer Cloud-Infrastruktur trainiert wird. Die Cloud-Infrastruktur umfasst beispielsweise einen Prozessor, der ausgebildet ist, das Signalbildprognosemodell zu trainieren.

Das Trainieren in der Cloud-Infrastruktur weist insbesondere den Vorteil auf, dass hier effizient ausreichend Rechenkapazitäten zur Verfügung gestellt werden können, um das Signalbildprognosemodell effizient trainieren zu können.

Erfindungsgemäß umfasst die Recheneinheit eine lokale Recheneinheit. Lokal bedeutet in diesem Kontext, dass die lokale Recheneinheit vor Ort an der Lichtsignalanlage angeschlossen ist.

Gemäß einer Ausführungsform, welche aber nicht Teil der Erfindung ist, ist die lokale Recheneinheit ausgebildet, das Signalbildprognosemodell zu trainieren. Die lokale Recheneinheit trainiert also insbesondere das Signalbildprognosemodell.

Das Trainieren mittels einer lokalen Recheneinheit weist insbesondere den Vorteil auf, dass das Signalbildprognosemodell unabhängig von entfernten Servern oder Computern trainiert werden kann.

Eine lokale Recheneinheit ist beispielsweise eine "PicoBox" oder ein "Raspberry pi".

Erfindungsgemäß wird das Signalbildprognosemodell in der Cloud-Infrastruktur trainiert, wobei erfindungsgemäß vorgesehen ist, dass nach dem Trainieren das trainierte Signalbildprognosemodell an die lokale Recheneinheit über ein Kommunikationsnetzwerk gesendet wird (, was im Englischen auch als ein "deployed" bezeichnet werden kann).

Basierend auf dem gesendeten trainierten Signalbildprognosemodell werden dann erfindungsgemäß mittels der lokalen Recheneinheit insbesondere in Echtzeit basierend auf den Verkehrsdaten und beispielsweise basierend auf den Signalzustandsdaten die Prognose des zukünftigen Signalbilds durchgeführt, welche beispielsweise sekündlich aktualisiert wird.

Für die Bildung einer Prognose basierend auf einem durch die Cloud-Infrastruktur bereitgestellten trainierten Signalbildprognosemodell mittels der lokalen Recheneinheit wird üblicherweise nur noch wenig Rechenleistung benötigt verglichen mit dem Training. Dadurch wird also der technische Vorteil bewirkt, dass das zukünftige Signalbild effizient und schnell prognostiziert werden kann.

In einer Ausführungsform ist vorgesehen, dass Verkehrsdaten und/oder Signalbilddaten und/oder von dem prognostizierten Signalbild entsprechende Signalbilddaten mittels der lokalen Recheneinheit (beispielsweise PicoBox) in die Cloud-Infrastruktur (, die auch als eine zentrale Recheneinheit bezeichnet werden kann,) gesendet werden, damit die Cloud-Infrastruktur das Signalbildprognosemodell basierend auf diesen Daten trainieren kann, insbesondere kontinuierlich trainieren kann.

Sobald das Signalbildprognosemodell so weit trainiert ist, dass eine Prognosegenauigkeit erhöht wurde, ist gemäß einer Ausführungsform vorgesehen, dass das trainierte Signalbildprognosemodell wieder zurück zur lokalen Recheneinheit gesendet wird. So ist in vorteilhafter Weise ein in sich geschlossenes, adaptives und sich selbst verbesserndes System (lokale Recheneinheit und zentrale Recheneinheit) gebildet.

Erfindungsgemäß umfasst also die Recheneinheit eine lokale Recheneinheit und eine zentrale Recheneinheit. Die lokale Recheneinheit ist erfindungsgemäß an einer Steuerungseinrichtung, beispielsweise an einem Steuergerät, der Lichtsignalanlage angeschlossen. Die zentrale Recheneinheit ist erfindungsgemäß Teil einer Cloud-Infrastruktur oder ist die Cloud-Infrastruktur.

Die zentrale Recheneinheit trainiert erfindungsgemäß die künstliche Intelligenz, erfindungsgemäß trainiert die zentrale Recheneinheit das Signalbildprognosemodell. Die zentrale Recheneinheit sendet das trainierte Signalbildprognosemodell erfindungsgemäß über ein Kommunikationsnetzwerk an die lokale Recheneinheit.

Die lokale Recheneinheit prognostiziert erfindungsgemäß das zukünftige Signalbild unter Verwendung des trainierten Signalbildprognosemodells der zentralen Recheneinheit, wie vorstehend und nachstehend beschrieben.

Für eine Kommunikation, also insbesondere für das Senden respektive Empfangen des (trainierten) Signalbildprognosemodells, weisen die lokale Recheneinheit und die zentrale Recheneinheit erfindungsgemäß jeweils eine Kommunikationsschnittstelle auf.

Die zentrale Recheneinheit kann auch als eine entfernte Recheneinheit bezeichnet werden, insofern diese im Gegensatz zur lokalen Recheneinheit nicht lokal, also vor Ort, an der Lichtsignalanlage, also erfindungsgemäß an der Steuerungseinrichtung der Lichtsignalanlage, angeschlossen ist.

Das Trainieren, insbesondere das Trainieren des Signalbildprognosemodells, wird gemäß einer Ausführungsform zusätzlich zu den Verkehrsdaten und zusätzlich zu den Signalbilddaten basierend auf Prozessdaten durchgeführt. Prozessdaten sind zum Beispiel oder umfassen zum Beispiel: Anwenderparameter aus der Steuerungslogik der Lichtsignalanlage und/oder Funktelegramme zur Buspriorisierung aus einem Steuergerät der Lichtsignalanlage.

Ein neuronales Netzwerk im Sinne der Beschreibung bezeichnet beispielsweise eine Software-seitige Architektur zum selbständigen Lernen. Ein neuronales Netzwerk ist also im Grunde ähnlich dem neuronalen Netzwerk eines Kindes. Neuronale Netzwerke sind also beispielsweise eine Ausprägung von Künstlicher Intelligenz.

Das Trainieren im Sinne der Beschreibung kann auch als ein "Lernen" bezeichnet werden, was im Englischen auch als "Deep Learning" ("Deep" für "tiefgehendes") bezeichnet wird.

"Deep Learning", auf Deutsch etwa tiefgehendes Lernen, bezeichnet eine Klasse von Optimierungsmethoden von künstlichen neuronalen Netzwerken, welche jeweils mehrere Zwischenlagen (englisch: "hidden layers") zwischen einer Eingabeschicht (hier insbesondere die Verkehrsdaten) und einer Ausgabeschicht (hier insbesondere die Signalbilddaten) aufweisen und dadurch eine umfangreiche innere Struktur aufweisen. In Erweiterung der Lernalgorithmen für Netzwerkstrukturen mit sehr wenigen oder keinen Zwischenlagen, wie zum Beispiel beim einlagigen Perzeptron, ermöglichen die Methoden des "Deep Learnings" auch bei mehreren Zwischenlagen einen stabilen Lernerfolg.

Das Trainieren wird erfindungsgemäß in einer Cloud-Infrastruktur durchgeführt.

Die Cloud-Infrastruktur ist somit erfindungsgemäß vorgesehen, das Signalbildprognosemodell zu trainieren.

Das Signalbildprognosemodell wird gemäß einer weiteren Ausführungsform, welche nicht Teil der Erfindung ist, mittels einer lokal installierten Recheneinheit trainiert.

In einer anderen Ausführungsform, welche nicht Teil der Erfindung ist, ist vorgesehen, dass das Signalbildprognosemodell mittels eines Kommunikationsnetzwerks trainiert wird. Das Verwenden einer Rechnerleistung eines Kommunikationsnetzwerks ist als solches unter dem Begriff "Edge computing" bekannt. Beim "Edge computing" wird die Rechnerleistung eben nicht mehr durch eine Cloud-Infrastruktur oder durch eine lokale Recheneinheit bereitgestellt, sondern "an der Edge" ("Kante") eines Netzwerkes, dem Kommunikationsnetzwerk. So ist es beispielsweise vorgesehen, dass mittels eines Funkturms eines Telekommunikationsdienstbetreibers eine Rechnerleistung zum Trainieren des Signalbildprognosemodells bereitgestellt wird. Die entsprechende Rechnerleistung kann beispielsweise vom Telekommunikationsdienstbetreiber gemietet werden.

Ein Kommunikationsnetzwerk, welches beispielsweise für das "Edge Computing" verwendet wird, ist beispielsweis ein LTE 5G Netz. Das Signalbildprognosemodell wird somit beim "Edge Computing" beispielsweise nicht mehr lokal oder auf einem entfernten Server, sondern in einem regional begrenzten Netz trainiert, was nicht Teil der Erfindung ist.

Eine lokale Recheneinheit, wie zum Beispiel eine Picobox, wird insbesondere deshalb erfindungsgemäß verwendet, damit die Prognose lokal ohne Latenzen erstellt werden kann. Sollte, was nicht Teil der Erfindung ist, eine sehr stabile Kommunikationsmöglichkeit zu einer Cloud-Infrastruktur vorhanden sein, muss nicht zwingend das Erstellen der Prognose lokal durch eine lokale Recheneinheit, wie zum Beispiel eine Picobox oder ein Raspberry pi, durchgeführt werden, was aber insofern sinnvoll und erfindungsgemäß vorgesehen ist, insofern für das lokale Erstellen der Prognose Kommunikationsverbindung zu einer Cloud-Infrastruktur benötigt wird.

Gemäß einer Ausführungsform, welche nicht Teil der Erfindung ist, ist vorgesehen, dass das Erstellen der Prognose in einer Cloud-Infrastruktur respektive mittels eines Kommunikationsnetzwerks ("Edge Computing" durchgeführt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: ein System zum Prognostizieren eines zukünftigen Signalbilds einer Lichtsignalanlage und
- FIG 2: ein Ablaufdiagramm eines Verfahrens zum Prognostizieren eines zukünftigen Signalbilds einer Lichtsignalanlage zeigen.

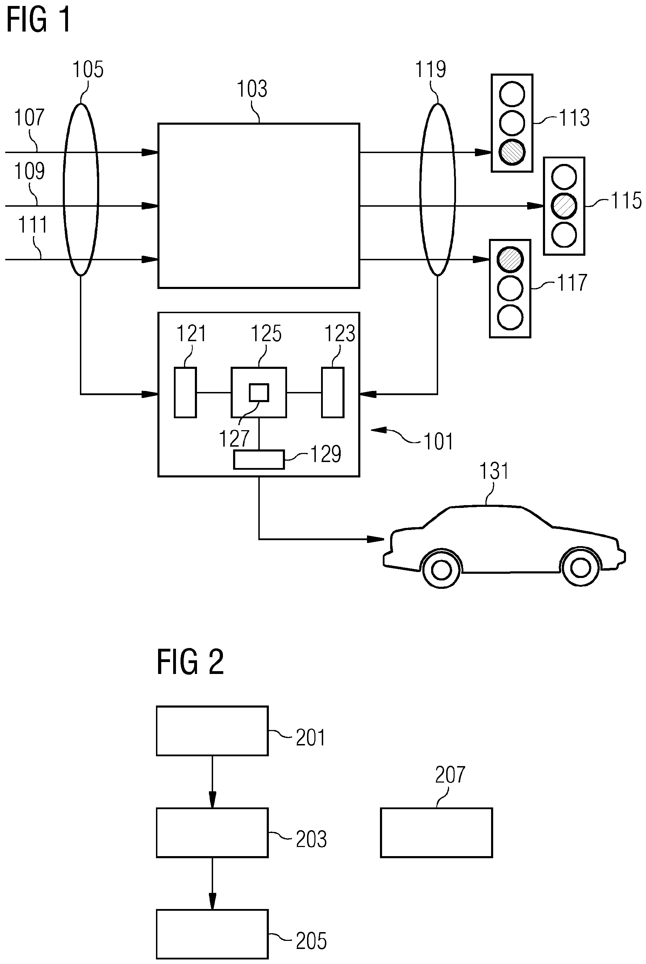

FIG 1 zeigt ein System 101 zum Prognostizieren eines zukünftigen Signalbilds einer Lichtsignalanlage 103.

Der Lichtsignalanlage 103 werden Verkehrsdaten 105 bereitgestellt. Die Verkehrsdaten 105 umfassen Detektordaten von drei Detektoren, was symbolisch mit drei Pfeilen mit den Bezugszeichen 107, 109 und 111 dargestellt ist.

Basierend auf den Verkehrsdaten 105 ermittelt die Lichtsignalanlage 103 jeweils ein Signalbild für drei Signalgruppen 113, 115 und 117.

Die diesen Signalbildern entsprechenden Signalbilddaten sind symbolisch als Ellipse mit dem Bezugszeichen 119 gekennzeichnet.

Das System 101 umfasst eine erste Kommunikationsschnittstelle 121 zum Empfangen der Verkehrsdaten 105. Das System 101 umfasst ferner eine zweite Kommunikationsschnittstelle 123 zum Empfangen von den Signalbilddaten 119.

Das System 101 umfasst ferner eine Recheneinheit 125. Die Recheneinheit 125 umfasst eine künstliche Intelligenz 127 zum Prognostizieren eines zukünftigen Signalbilds basierend auf den Verkehrsdaten 105.

Hierbei ist vorgesehen, dass die künstliche Intelligenz 127 unter Verwendung der Verkehrsdaten 105 sowie der Signalbilddaten 119 trainiert wird.

Das System 101 umfasst ferner eine dritte Kommunikationsschnittstelle 129, die dem prognostizierten Signalbild entsprechenden Signalbilddaten über ein Kommunikationsnetzwerk an ein Kraftfahrzeug 131 sendet. Das Kraftfahrzeug 131 weist ein Endgerät (nicht gezeigt) auf, welchem eine Netzwerkadresse zugeordnet ist.

Erfindungsgemäß ist vorgesehen, dass die künstliche Intelligenz 127 ein Signalbildprognosemodell aufweist, basierend auf welchem das zukünftige Signalbild unter Verwendung der Verkehrsdaten prognostiziert wird.

Das Signalbildprognosemodell wird erfindungsgemäß basierend auf den Verkehrsdaten und den Signalbilddaten der Lichtsignalanlage trainiert.

FIG 2 zeigt ein Ablaufdiagramm eines Verfahrens zum Prognostizieren eines zukünftigen Signalbilds einer Lichtsignalanlage.

Das Verfahren umfasst die folgenden Schritte:
Empfangen 201 von Verkehrsdaten für eine Lichtsignalanlage, basierend auf welchen die Lichtsignalanlage ein zukünftiges Signalbild ermitteln kann, um das ermittelte Signalbild anzuzeigen,
Empfangen 203 von dem mittels der Lichtsignalanlage ermittelten Signalbild entsprechenden Signalbilddaten der Lichtsignalanlage,
Prognostizieren 205 eines zukünftigen Signalbilds basierend auf den Verkehrsdaten mittels einer Recheneinheit umfassend eine künstliche Intelligenz,
wobei die künstliche Intelligenz basierend auf den Verkehrsdaten und den Signalbilddaten der Lichtsignalanlage trainiert 207 wird.

Das erfindungsgemäße Konzept basiert auf der Verwendung einer künstlichen Intelligenz, um ein zukünftiges Signalbild einer Lichtsignalanlage zu prognostizieren. Die künstliche Intelligenz umfasst beispielsweise ein neuronales Netzwerk. Beispielsweise ist ein Maschinenlern-Algorithmus in der künstlichen Intelligenz implementiert.

Der Begriff "maschinelles Lernen" ist im Englischen auch unter dem Begriff "Machine Learning" oder "Deep Learning" bekannt.

So ist es also in vorteilhafter Weise ermöglicht, dass beispielsweise bei einer verkehrsabhängigen Lichtsignalanlage, also bei einer Lichtsignalanlage, deren Signalbilder abhängig von einem Verkehr gesteuert werden, wobei eine Programmierung und eine Versorgung der Lichtsignalanlage nicht bekannt sind, in effizienter Weise ein zukünftiges Signalbild der Lichtsignalanlage prognostiziert werden kann.

Beispielsweise ist die Lichtsignalanlage mit mehreren Detektoren logisch verbunden. Beispielsweise ist vorgesehen, dass das System zum Prognostizieren eines zukünftigen Signalbilds einer Lichtsignalanlage mit den gleichen Detektoren ebenfalls logisch verbunden ist.

Somit erhält die künstliche Intelligenz die gleichen Daten wie die Lichtsignalanlage. Weiter erhält die künstliche Intelligenz eine Ausgabe der Lichtsignalanlage, also das mittels der Lichtsignalanlage ermittelte Signalbild. Die künstliche Intelligenz kann somit beispielsweise unter Verwendung eines neuronalen Netzwerks respektive unter Verwendung eines Maschinenlern-Algorithmus eine Reaktion der Lichtsignalanlage respektive ein Verhalten der Lichtsignalanlage soweit erlernen, dass sie eine zuverlässige Prognose über ein zukünftiges Signalbild bereitstellen kann.

Eine Information über das prognostizierte Signalbild kann beispielsweise an Fahrer von Kraftfahrzeugen und/oder Verkehrsteilnehmer kommuniziert werden.

Das erfindungsgemäße Konzept ermöglicht es somit, dass zukünftige Signalbilder von Lichtsignalanlagen effizient und zuverlässig prognostiziert werden können. Basierend auf diesen prognostizierten Signalbildern kann beispielsweise in vorteilhafter Weise ein Verkehrsfluss effizient gesteuert werden, was beispielsweise eine Fahreffizienz respektive eine Fahrsicherheit erhöhen kann, beispielsweise weil weniger Kraftstoff verbraucht wird respektive weniger Schadstoffe oder Abgase, beispielsweise Kohlendioxid, ausgestoßen werden.

Weiter kann die Information über das prognostizierte Signalbild auch für eine Navigation verwendet werden. Beispielsweise kann eine Reiseroute noch genauer prognostiziert werden, wenn zuverlässig bekannt ist, wie ein zukünftiges Signalbild einer Lichtsignalanlage aussieht.

Das erfindungsgemäße Konzept muss in vorteilhafter Weise keine Anlagen-spezifischen oder herstellerspezifischen Besonderheiten einer Lichtsignalanlage berücksichtigen. Eine vorhandene Steuerlogik und eine Programmierung einer Lichtsignalanlage sind nicht relevant, da lediglich die realen Input-Parameter (Verkehrsdaten) und die realen Output-Parameter (ermitteltes Signalbild, also Signalbilddaten der Lichtsignalanlage) für das Trainieren der künstlichen Intelligenz, insbesondere für das Trainieren des Signalbildprognosemodells, verwendet werden.

Beispielsweise ist das System als eine eigene Baugruppe ausgebildet respektive kann als eine solche betrieben werden, die beispielsweise zu einer Vielzahl von Lichtsignalanlagen-Steuergeräten kompatibel ist, was in vorteilhafter Weise eine einfache, stadtrespektive landesweite Skalierung ermöglicht.

Als technisches Mittel zur Anwendung von einer künstlichen Intelligenz stehen beispielsweise verschiedene Frameworks zur Verfügung. So bieten beispielsweise Google (TensorFlow), Microsoft (Azure ML) oder IBM (Watson) jeweils eine Umgebung an, auf welcher mittels neuronaler Netze Modelle, hier also insbesondere Signalbildprognosemodelle, trainiert und angewendet respektive verwendet werden können.

Nach einer Ausführungsform ist das System als eine eigenständige Baugruppe ausgebildet, welche beispielsweise über standardisierte Schnittstellen an einer Steuerungseinrichtung (, welche beispielsweise ein Steuergerät ist,) der Lichtsignalanlage implementiert oder angeschlossen werden kann. Das heißt also, dass nach einer Ausführungsform das System beispielsweise an einer Steuerungseinrichtung einer Lichtsignalanlage angeschlossen ist. Für dieses Anschließen werden also insbesondere die erste respektive die zweite Kommunikationsschnittstelle verwendet.

Somit kann das erfindungsgemäße Konzept beispielsweise in vorteilhafter Weise an Städte und Kommunen verkauft werden.

Erfindungsgemäß ist vorgesehen, dass die künstliche Intelligenz respektive die Recheneinheit Teil einer Cloud-Infrastruktur ist.

Das heißt also, dass erfindungsgemäß die Verkehrsdaten und die Signalbilddaten der Lichtsignalanlage an eine Cloud-Infrastruktur gesendet werden, wobei dann die künstliche Intelligenz, die Teil dieser Cloud-Infrastruktur ist, entsprechend den vorstehend gemachten Ausführungen trainiert wird und ein zukünftiges Signalbild entsprechend den vorstehend gemachten Ausführungen prognostiziert.

Die dem prognostizierten Signalbild entsprechenden Signalbilddaten können beispielsweise Kraftfahrzeugherstellern oder Kraftfahrzeuglieferanten zur Verfügung gestellt werden, welche dann diese Daten an ihre Kraftfahrzeuge senden, so dass diese dann pro Kraftfahrzeug angezeigt werden können, was beispielsweise als eine Komfortfunktion verkauft respektive beworben werden kann.

Das erfindungsgemäße Konzept ermöglicht also in vorteilhafter Weise eine selbstlernende Prognose eines zukünftigen Signalbilds einer Lichtsignalanlage unter Verwendung lediglich der Verkehrsdaten und der Signalbilddaten der Lichtsignalanlage. Irgendwelche Steuerverfahren, die in der Lichtsignalanlage implementiert sind, sind für das erfindungsgemäße Konzept nicht erforderlich. Eine Kenntnis hierüber ist also nicht notwendig.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Prognostizieren eines zukünftigen Signalbilds einer Lichtsignalanlage (103), umfassend die folgenden Schritte:
Empfangen (201) von Verkehrsdaten (105) für eine Lichtsignalanlage (103), basierend auf welchen die Lichtsignalanlage (103) ein zukünftiges Signalbild ermittelt um das ermittelte Signalbild anzuzeigen,
Empfangen (203) von dem mittels der Lichtsignalanlage (103) basierend auf den gleichen Verkehrsdaten ermittelten Signalbild entsprechenden Signalbilddaten (119) der Lichtsignalanlage (103) und ein
Prognostizieren (205) eines zukünftigen Signalbilds basierend auf den Verkehrsdaten (105) mittels einer Recheneinheit (125) umfassend eine künstliche Intelligenz (127),
wobei die künstliche Intelligenz (127) basierend auf den Verkehrsdaten (105) und den Signalbilddaten (119) der Lichtsignalanlage (103) trainiert (207) wird, wobei im Rahmen des Trainings, das prognostizierte zukünftige Signalbild mit dem Signalbild verglichen wird, welches mittels der Lichtsignalanlage (103) unter Verwendung der Verkehrsdaten ermittelt wurde,
wobei die künstliche Intelligenz (127) ein Signalbildprognosemodell aufweist, basierend auf welchem das zukünftige Signalbild unter Verwendung der Verkehrsdaten prognostiziert wird,
wobei das Signalbildprognosemodell basierend auf den Verkehrsdaten (105) und den Signalbilddaten (119) der Lichtsignalanlage (103) trainiert wird,
**dadurch gekennzeichnet, dass**
die Recheneinheit (125) eine lokale Recheneinheit und eine zentrale Recheneinheit aufweist,
wobei die lokale Recheneinheit an einer Steuerungseinrichtung der Lichtsignalanlage (103) angeschlossen ist,
wobei die zentrale Recheneinheit Teil einer Cloud-Infrastruktur oder eine Cloud-Infrastruktur ist,
wobei die zentrale Recheneinheit das Signalbildprognosemodell trainiert und das trainierte Signalbildprognosemodell über ein Kommunikationsnetzwerk an die lokale Recheneinheit sendet,
wobei die lokale Recheneinheit das zukünftige Signalbild unter Verwendung des trainierten Signalbildprognosemodells der zentralen Recheneinheit prognostiziert.

2. Verfahren nach Anspruch 1, wobei die künstliche Intelligenz (127) ein neuronales Netzwerk umfasst.

3. Verfahren nach Anspruch 1 oder 2, wobei ein Maschinenlern-Algorithmus in der künstlichen Intelligenz (127) implementiert ist.

4. Verfahren nach einem der Ansprüche 1 bis 3, umfassend ferner ein Senden von dem prognostizierten Signalbild entsprechenden Signalbilddaten über ein Kommunikationsnetzwerk an eine Netzwerkadresse.

5. System (101) zum Prognostizieren eines zukünftigen Signalbilds einer Lichtsignalanlage (103), umfassend:
eine erste Kommunikationsschnittstelle (121) zum Empfangen von Verkehrsdaten (105) für eine Lichtsignalanlage (103), basierend auf welchen die Lichtsignalanlage (103) ein zukünftiges Signalbild ermittelt, um das ermittelte Signalbild anzuzeigen,
eine zweite Kommunikationsschnittstelle (123) zum Empfangen von dem mittels der Lichtsignalanlage (103) basierend auf den gleichen Verkehrsdaten ermittelten Signalbild entsprechenden Signalbilddaten (119) der Lichtsignalanlage (103) und
eine Recheneinheit (125) umfassend eine basierend auf den Verkehrsdaten (105) und den Signalbilddaten (119) der Lichtsignalanlage (103) trainierbare künstliche Intelligenz (127) zum Prognostizieren eines zukünftigen Signalbilds basierend auf den Verkehrsdaten (105),
wobei die künstliche Intelligenz (127) ein Signalbildprognosemodell aufweist, wobei die künstliche Intelligenz (127) ausgebildet ist, basierend auf dem Signalbildprognosemodell das zukünftige Signalbild unter Verwendung der Verkehrsdaten zu prognostizieren,
**dadurch gekennzeichnet, dass**
das System (101) eingerichtet ist, das Verfahren nach einem der vorherigen Ansprüche auszuführen,
wobei die Recheneinheit (125) eine lokale Recheneinheit und eine zentrale Recheneinheit aufweist,
wobei die lokale Recheneinheit an einer Steuerungseinrichtung der Lichtsignalanlage (103) angeschlossen ist,
wobei die zentrale Recheneinheit Teil einer Cloud-Infrastruktur oder eine Cloud-Infrastruktur ist,
wobei die zentrale Recheneinheit ausgebildet ist, das Signalbildprognosemodell basierend auf den Verkehrsdaten (105) und den Signalbilddaten (119) der Lichtsignalanlage (103) zu trainieren,
wobei die zentrale Recheneinheit eine Kommunikationsschnittstelle zum Senden des trainierten Signalbildprognosemodells über ein Kommunikationsnetzwerk an die lokale Recheneinheit aufweist,
wobei die lokale Recheneinheit eine Kommunikationsschnittstelle zum Empfangen des trainierten Signalbildprognosemodells der zentralen Recheneinheit über das Kommunikationsnetzwerk aufweist,
wobei die lokale Recheneinheit ausgebildet ist, das zukünftige Signalbild unter Verwendung des trainierten Signalbildprognosemodells der zentralen Recheneinheit zu prognostizieren.

6. System (101) nach Anspruch 5, wobei die künstliche Intelligenz (127) ein neuronales Netzwerk umfasst.

7. System (101) nach Anspruch 5 oder 6, wobei ein Maschinenlern-Algorithmus in der künstlichen Intelligenz (127) implementiert ist.

8. System (101) nach einem der Ansprüche 5 bis 7, umfassend ferner eine dritte Kommunikationsschnittstelle (129) zum Senden von dem prognostizierten Signalbild entsprechenden Signalbilddaten über ein Kommunikationsnetzwerk an eine Netzwerkadresse.

9. Computerprogramm, umfassend Programmcode zur Durchführung des Verfahrens nach einem der Ansprüche 1 bis 4, wenn das Computerprogramm auf einem Computer, insbesondere auf einer Recheneinheit (125) umfassend eine künstliche Intelligenz (127), ausgeführt wird.

## Claims

1. Method for predicting a future signal timing of a traffic light system (103), comprising the following steps:
receiving (201) traffic data (105) for a traffic light system (103), on the basis of which the traffic light system (103) determines a future signal timing in order to display the determined signal timing,
receiving (203) signal timing data (119) of the traffic light system (103) which correspond to the signal timing determined by means of the traffic light system (103) on the basis of the same traffic data and
predicting (205) a future signal timing on the basis of the traffic data (105) by means of a computing unit (125) comprising an artificial intelligence (127),
wherein the artificial intelligence (127) is trained (207) on the basis of the traffic data (105) and the signal timing data (119) of the traffic light system (103), wherein the scope of the training comprises a comparison between the predicted future signal timing and the signal timing determined by means of the traffic light system (103) using the traffic data,
wherein the artificial intelligence (127) comprises a signal timing prediction model, on the basis of which the future signal timing is predicted using the traffic data, wherein the signal timing prediction model is trained on the basis of the traffic data (105) and the signal timing data (119) of the traffic light system (103),
**characterized in that**
the computing unit (125) comprises a local computing unit and a central computing unit,
wherein the local computing unit is connected to a control device of the traffic light system (103),
wherein the central computing unit is part of a cloud infrastructure or is a cloud infrastructure,
wherein the central computing unit trains the signal timing prediction model and transmits the trained signal timing prediction model to the local computing unit via a communications network,
wherein the local computing unit predicts the future signal timing using the trained signal timing prediction model from the central computing unit.

2. Method according to Claim 1, wherein the artificial intelligence (127) comprises a neural network.

3. Method according to Claim 1 or 2, wherein a machine learning algorithm is implemented in the artificial intelligence (127).

4. Method according to any one of Claims 1 to 3, further comprising a transmission of signal timing data which correspond to the predicted signal timing to a network address via a communications network.

5. System (101) for predicting a future signal timing of a traffic light system (103), comprising:
a first communications interface (121) for receiving traffic data (105) for a traffic light system (103), on the basis of which the traffic light system (103) determines a future signal timing in order to display the determined signal timing,
a second communications interface (123) for receiving signal timing data (119) of the traffic light system (103) which correspond to the signal timing determined by means of the traffic light system (103) on the basis of the same traffic data and
a computing unit (125) comprising an artificial intelligence (127) for predicting a future signal timing on the basis of the traffic data (105), said artificial intelligence being trainable on the basis of the traffic data (105) and the signal timing data (119) of the traffic light system (103),
wherein the artificial intelligence (127) comprises a signal timing prediction model, wherein the artificial intelligence (127) is designed to predict the future signal timing on the basis of the signal timing prediction model using the traffic data,
**characterized in that**
the system (101) is configured to carry out the method according to any one of the preceding claims,
wherein the computing unit (125) comprises a local computing unit and a central computing unit,
wherein the local computing unit is connected to a control device of the traffic light system (103),
wherein the central computing unit is part of a cloud infrastructure or is a cloud infrastructure,
wherein the central computing unit is designed to train the signal timing prediction model on the basis of the traffic data (105) and the signal timing data (119) of the traffic light system (103),
wherein the central computing unit comprises a communications interface for transmitting the trained signal timing prediction model to the local computing unit via a communications network,
wherein the local computing unit comprises a communications interface for receiving the trained signal timing prediction model from the central computing unit via the communications network,
wherein the local computing unit is designed to predict the future signal timing using the trained signal timing prediction model from the central computing unit.

6. System (101) according to Claim 5, wherein the artificial intelligence (127) comprises a neural network.

7. System (101) according to Claim 5 or 6, wherein a machine learning algorithm is implemented in the artificial intelligence (127).

8. System (101) according to any one of Claims 5 to 7, further comprising a third communications interface (129) for transmitting signal timing data which correspond to the predicted signal timing to a network address via a communications network.

9. Computer program, comprising program code for carrying out the method according to any one of Claims 1 to 4 when the computer program is executed on a computer, in particular on a computing unit (125) comprising an artificial intelligence (127).

## Revendications

1. Procédé pour pronostiquer une image de signal future d'une installation de signaux lumineux (103), comprenant les étapes suivantes :
recevoir (201) des données de circulation (105) pour une installation de signaux lumineux (103), sur la base desquelles l'installation de signaux lumineux (103) détermine une image de signal future afin d'afficher l'image de signal déterminée,
recevoir (203) des données d'image de signal (119) de l'installation de signaux lumineux (103), correspondant à l'image de signal déterminée au moyen de l'installation de signaux lumineux (103) sur la base des mêmes données de circulation et
pronostiquer (205) une image de signal future sur la base des données de circulation (105) au moyen d'une unité de calcul (125) comprenant une intelligence artificielle (127),
dans lequel l'intelligence artificielle (127) est entraînée (207) sur la base des données de circulation (105) et des données d'image de signal (119) de l'installation de signaux lumineux (103), dans lequel,
dans le cadre de l'apprentissage, l'image de signal future pronostiquée est comparée à l'image de signal qui a été déterminée au moyen de l'installation de signaux lumineux (103) en utilisant les données de circulation,
dans lequel l'intelligence artificielle (127) comporte un modèle de pronostic d'image de signal sur la base duquel l'image de signal future est pronostiquée en utilisant les données de circulation,
dans lequel le modèle de pronostic d'image de signal est entraîné sur la base des données de circulation (105) et
des données d'image de signal (119) de l'installation de signaux lumineux (103),
**caractérisé en ce que**
l'unité de calcul (125) comprend une unité de calcul locale et une unité de calcul centrale,
dans lequel l'unité de calcul locale est connectée à un dispositif de commande de l'installation de signaux lumineux (103),
dans lequel l'unité de calcul centrale est une partie d'une infrastructure en nuage ou une infrastructure en nuage,
dans lequel l'unité de calcul centrale entraîne le modèle de pronostic d'image de signal et envoie le modèle de pronostic d'image de signal entraîné à l'unité de calcul locale par l'intermédiaire d'un réseau de communication,
dans lequel l'unité de calcul locale pronostique l'image de signal future en utilisant le modèle de pronostic d'image de signal entraîné de l'unité de calcul centrale.

2. Procédé selon la revendication 1, dans lequel l'intelligence artificielle (127) comprend un réseau neuronal.

3. Procédé selon la revendication 1 ou 2, dans lequel un algorithme d'apprentissage automatique est mis en oeuvre dans l'intelligence artificielle (127).

4. Procédé selon l'une quelconque des revendications 1 à 3, comprenant en outre un envoi de données d'image de signal correspondant à l'image de signal pronostiquée par l'intermédiaire d'un réseau de communication à une adresse de réseau.

5. Système (101) pour pronostiquer une image de signal future d'une installation de signaux lumineux (103), comprenant :
une première interface de communication (121) destinée à recevoir des données de circulation (105) pour une installation de signaux lumineux (103), sur la base desquelles l'installation de signaux lumineux (103) détermine une image de signal future afin d'afficher l'image de signal déterminée,
une deuxième interface de communication (123) destinée à recevoir des données d'image de signal (119) de l'installation de signaux lumineux (103), correspondant à l'image de signal déterminée au moyen de l'installation de signaux lumineux (103) sur la base des mêmes données de circulation et
une unité de calcul (125) comprenant une intelligence artificielle (127) pouvant être entraînée sur la base des données de circulation (105) et des données d'image de signal (119) de l'installation de signaux lumineux (103) pour pronostiquer une image de signal future sur la base des données de circulation (105),
dans lequel l'intelligence artificielle (127) comporte un modèle de pronostic d'image de signal, dans lequel l'intelligence artificielle (127) est conçue pour pronostiquer l'image de signal future en utilisant les données de circulation, sur la base du modèle de pronostic d'image de signal,
**caractérisé en ce que**
le système (101) est conçu pour mettre en oeuvre le procédé selon l'une des revendications précédentes,
dans lequel l'unité de calcul (125) comporte une unité de calcul locale et une unité de calcul centrale,
dans lequel l'unité de calcul locale est connectée à un dispositif de commande de l'installation de signaux lumineux (103),
dans lequel l'unité de calcul centrale est une partie d'une infrastructure en nuage ou une infrastructure en nuage,
dans lequel l'unité de calcul centrale est conçue pour entraîner le modèle de pronostic d'image de signal sur la base des données de circulation (105) et des données d'image de signal (119) de l'installation de signaux lumineux (103),
dans lequel l'unité de calcul centrale comporte une interface de communication destinée à envoyer le modèle de pronostic d'image de signal entraîné à l'unité de calcul locale par l'intermédiaire d'un réseau de communication,
dans lequel l'unité de calcul locale comporte une interface de communication destinée à recevoir le modèle de pronostic d'image de signal entraîné de l'unité de calcul centrale par l'intermédiaire du réseau de communication,
dans lequel l'unité de calcul locale est conçue pour pronostiquer l'image de signal future en utilisant le modèle de pronostic d'image de signal entraîné de l'unité de calcul centrale.

6. Système (101) selon la revendication 5, dans lequel l'intelligence artificielle (127) comprend un réseau neuronal.

7. Système (101) selon la revendication 5 ou 6, dans lequel un algorithme d'apprentissage automatique est mis en oeuvre dans l'intelligence artificielle (127).

8. Système (101) selon l'une quelconque des revendications 5 à 7, comprenant en outre une troisième interface de communication (129) destinée à envoyer des données d'image de signal correspondant à l'image de signal pronostiquée par l'intermédiaire d'un réseau de communication à une adresse de réseau.

9. Programme informatique comprenant un code de programme permettant la mise en oeuvre du procédé selon l'une des revendications 1 à 4, lorsque le programme informatique est exécuté sur un ordinateur, notamment sur une unité de calcul (125) comprenant une intelligence artificielle (127).
